# EUROPEAN PATENT SPECIFICATION

(11) **EP 3 603 766 B1**
(45) Date of publication and mention of the grant of the patent: **19.06.2024**
(21) Application number: 17901471.7
(22) Date of filing: 05.12.2017
(51) Int. Cl.: B01D 24/12, B01D 27/02, B01D 35/26, C02F 1/00, B65D 51/28

(54) **LIQUID PURIFICATION DEVICE**
FLÜSSIGKEITSREINIGUNGSVORRICHTUNG
DISPOSITIF DE PURIFICATION DE LIQUIDE

(30) Priority: 20.03.2017 RU 2017109342
(43) Date of publication of application: 05.02.2020
(73) Proprietor: Electrophor, Inc., Oakland Park, FL 33334-4210 (US)
(72) Inventor: CHERNYI, Alexander Alexandrovich, St.Petersburg 195252 (RU); KUZMIN, Alexey Leonidovich, St.Petersburg 198215 (RU); SHMIDT, Joseph L., Woodmere New York 11598 (US)
(74) Representative: Danubia Patent & Law Office LLC
(86) International application number: PCT/RU2017/000899
(87) International publication number: WO 2018/174744

(56) References cited:
- WO-A1-2016/018175
- EA-B1- 010 814
- GB-A- 2 330 133
- RU-C1- 2 136 558
- RU-C1- 2 445 999
- RU-C2- 2 213 683
- RU-C2- 2 483 011
- RU-C2- 2 494 937
- RU-C2- 2 502 657
- RU-C2- 2 527 123
- RU-U1- 110 363
- US-A1- 2013 119 060
- US-A1- 2013 199 974
- US-A1- 2014 332 478
- US-B1- 8 097 159

## Description

The invention belongs to liquid, predominantly to water purification devices which are used as off-line units in household, outdoors, in the village and service departments. Particulary, the given invention is in the filed of pressure off-line units.

The invention can be used for water purification and other liquids of household use, in the medical and other branches of industry.

### State of the art

According to International Publication Pamphlet No. WO2017013029 (IPC C02F 1/00, B65D 51/28, publ. 26.01.2017, applicant Brita GMBH) the liquid purification device is known from the state of the art. The device of International Publication Pamphlet No. WO2017013029 contains the raw liquid vessel with a removable lid, filtration cartridge, purified liquid vessel with the purified liquid outlet means. The raw liquid vessel consists of upper and lower parts. The upper part is divided from the lower part with the collar, which is made along the perimeter of the outer wall of the raw liquid vessel. The sealing ring is made along the collar. Protrusions are made on the side and back walls of the upper part of the raw liquid vessel. The spout of the raw liquid vessel is made with the edge, the length of which is longer than the length of the spout. The edge of the raw liquid vessel has protruding and inner parts. The protrusion is made in the protruding part of the edge. The protrusion fully closes the purified liquid outlet means of the purified liquid vessel.

At least part of the spout of the raw liquid vessel is made at an angle to the horizontal plane. Raw liquid vessel is inserted into the purified liquid vessel. On the inner front wall of the purified liquid vessel, two protrusions are symmetrically made. On the inner back wall of the purified liquid vessel one protrusion is made.

The shape of the lid fully repeats the shape of the spout of the raw liquid vessel. The sealing ring is made along the perimeter of the lower edge of the side wall. The sealing ring is made of soft elastic material, and flattens when the raw liquid vessel is covered with the lid, providing the air-tight connection between the lid and the spout of the raw liquid vessel. The sealing ring is made with the split made in the elastic material. On the outer surface of the lid there is an ear to open the lid. On the back inner part of the edge of raw liquid vessel there is a split. When the raw liquid vessel is closed with the lid, the split, made in the lower part of the lid and the split, made on the back wall of the inner part of the edge of the raw liquid vessel match together and form the channel for air flow.

The device according to International Publication Pamphlet No. WO2017013029 functions in the following way. Raw liquid vessel is inserted into the purified liquid vessel. The raw liquid vessel is in its initial stage. The raw liquid is poured into the raw liquid vessel through the spout. The raw liquid vessel is closed with the lid. The sealing ring, which is made along the perimeter of the lower edge of the side wall, provides air tightness of the raw liquid vessel. The liquid flows into the purified liquid vessel and gradually is replaced with air, which comes into the raw liquid vessel through the channel, formed as two splits, made in the lid and in the spout. When the filtration process is finished, the customer presses the protruding part of the spout of the raw liquid vessel. When the protruded part of the spout is pressed, the raw liquid vessel goes to second stage due to the protrusions made on the inner walls of the purified liquid vessel, the collar, dividing upper and lower parts of the raw liquid vessel and the protrusion made on the back wall of the raw liquid vessel. This means that a part of the vessel with the horizontal part of the spout rises up, opening the purified liquid outlet of the purified liquid vessel, and the part of the raw liquid vessel with inclined part of the spout goes down. The protrusion, made on the back wall of the raw liquid vessel keeps the raw liquid vessel in the second stage. A channel, formed by the slip in the lid and slip in the spout let the air replace liquid, which flows out of the filtration cartridge.

The device according to International Publication Pamphlet No. WO2017013029 has several drawbacks. For example, the device cannot return to its initial stage by itself, for example under the gravity forces of the raw liquid vessel. The consumer has to return the raw liquid vessel to its initial stage. Besides, as it was said before, the sealing which is made along the perimeter of the upper edge of the raw liquid vessel is made of elastic and soft material and that provides the airtight connection, but due to this it can be difficult to open the lid, a kind of sticking can occur.

According to US Appl. No. 2007/0221561 (IPC B01D 27/00, publ. 27.09.2007, Applicant: 3M Innovative Properties Company), the liquid purification device is known from the state of the art. The device contains the purified liquid vessel, filtration cartridge, the purified liquid outlet means and the lid. Filtration cartridge is placed in the purified liquid vessel. The device is made with the flexible hose, which is connected to the raw water soruce, for example to the faucet from where the raw liquid comes out under pressure. The filtration cartridge contians the bowl with the raw water inlet. The casing with the carbon element is inserted inside the bowl. There is a raw water aperture in the lower wall of the casing. The restraining wall with two brows, located on the opposite sides is made on the upper wall of the bowl. The channel for the purified liquid is made inside the carbon element. There is a head on the upper wall of the casing. The nozzle for purified liquid outlet is located in the head. The nozzle is connected to the purified liquid channel. Besides, there are two brows on the opposite sides of the outer wall of the casing. Brows are indented for quick fastening the casing with the carbon element into the bowl of the filtration cartridge. The lid of the liquid purification device fully closes purified liquid vessel. There is a hatch in the lid. On the inner wall of the hatch there are two brows located at a certain distance from each other. These brows are necessary to determine if the casing with the carbon element was inserted in a proper way into the bowl of the filtration cartridge.

According to US Appl. No. 2007/0221561, the liquid purification device functions as follows. The hatch, made in the lid, is opened. The casing with the carbon element is placed in the filtration cartridge bowl. After that the casing is turned so as the brows, made on the opposite sides of the casing are covered with the brows of the restriction wall of the bowl of the filtration cartridge. Then the hatch of the lid is closed. If the filtration cartridge is placed in a right way, the nozzle, which overhangs the casing will be between indicated brows and will be fixed, the hatch will totally close providing airtight connection. Then the nozzle is connected to the raw liquid source which is under pressure. The raw liquid flows through the nozzle into the inlet hole and then into the filter bowl. There liquid collides with the casing, changes its direction and through the hole made in the lower wall of the casing flows into carbon element. The purified liquid flows upwards along the channel made in the carbon element and through the nozzle goes into the purified liquid vessel. After the purified liquid vessel is full with the purified liquid, the liquid purification device may be switched off from the raw liquid source.

The device according to US Appl. No. 2007/0221561 has the following drawback. From the description it is understood that the lid is the part of the purified liquid vessel. The hatch is the only connection with environment and is the only entrance to the inner space of the purified liquid vessel. Such a construction declines the ease of use, for example it makes difficult to clean the inner space of the purified liquid vessel. This will cause the formation of the coat and the bacteria growth in the already purified water. Besides the raw liquid comes from the outer source, working under pressure. If the pressure decreases the filtration speed will decrease too. Such method of liquid purification using the liquid purification device according to US Appl. No. 2007/0221561 narrows the designated area of the indicated device. It can be used only where there are the raw liquid source working under pressure - cities and country houses with the plumbing.

According to RU Patent No. 2445999 (IPC B01D 27/02, B01D 35/26, publ. 27.03.2012, applicant ZAO «Aquaphor Production»), the liquid purification device is known form the state of the art. The device according to RU Patent No. 2445999 contains the raw liquid vessel with the spout, lid, filtration cartridge, purified liquid vessel, the purified liquid outlet means, the gas injection block, connected to the raw liquid vessel, and containing gas injection means, control panel and power supply. The lid is one removable part, covering the spout of the raw liquid vessel by screw, bayonet connection or by latching. There is a liquid level sensor in the purified liquid vessel. The gas injection block also has the liquid level sensor and at least one feedback coupling means. The outlet of the gas injection means, executed as pneumatic pressurizer is connected to the control panel inlet, which outlet is connected to the power supply inlet. The liquid level sensor and at least one feedback coupling means are connected to the control panel. The control panel sets the sequences and the time modes for the pneumatic pressureizer during filtration. Setting the sequences and the time modes for the pneumatic pressureizer during filtration is done by, for example, programmable controler, located in the control panel. The stabilization of the positive air pressure above the raw water level is done by the feedback algorithm, using the feedback couling means and other sesnors or means transforming the positive pressure values into the signal for the control panel. The feedback coupling means is intentded for positive air pressure value maintenance above the raw liquid level.
** : , also published as US Appl. No. 2013/0199974 A1, regarded as the closest prior art,

The liquid purification device of RU Patent No. 2445999 functions as follows. The raw liquid is poured through the spout into the raw liquid vessel. The vessel is closed with the lid. Then the device is switched on. Pneumatic pressurizer begins to pump the air into the raw water vessel. Under positive air pressure liquid starts to flow through the filtration cartridge into the purified liquid vessel. When a certain value of the positive pressure is reached the feedback coupling means gives the signal to the control panel and it switches off the pneumatic pressurizer. As the liquid flows through the filtration cartridge the pressure in the raw liquid vessel decreases. When the positive pressure reaches its minimal value the feedback coupling means gives a signal to the control panel, which switches on the pneumatic pressurizer to raise the positive pressure to the certain value. Such cyclic operating mode repeats until all of the raw liquid is filtered. The sensor, placed in the raw liquid vessel gives a signal to the control panel. After it the liquid purification device is switched off.

The main drawback of the liquid purification device of RU Patent No. 2445999 is that the construction of the lid and of the spout does not allow urgent and safe opening of the lid during the operation mode of liquid purification device or when the control panel is out of order after the filtration cycle is finished. In another way in case of abrupt immediate and full seal failure of the raw liquid vessel the lid can be bounced off, and this leads to user injury. < **insert page 5a** here >

The object of the invention and the technical result achieved with the use of the invention is to develop new liquid purification device, increasing degree of safety and ease of use.

The problem to be solved and the claimed technical result when using this invention is achieved by a liquid purification device in accordance with claim 1. Possible further preferred embodiments of the liquid purification device according to the invention are set forth in claims 2 to 14.

Furthermore, preferentially, the lid contains a base and an upper part placed in the body frame and the liquid purification device contains a closure member, the closure member can be formed when the spout and the lid are connected. Moreover,

International Publication Pamphlet No. WO2016018175 discloses a group of inventions that relates to devices for purifying liquid, primarily drinking water. Said devices are intended for use as autonomous devices in domestic conditions, in allotments and gardens and the service industry. The group of inventions also relates to methods for purifying liquid. In particular, this invention concerns autonomous pressure devices which subject defined portions of liquid to processing under pressure. The devices and the methods for purifying liquid make it possible to rapidly and efficiently purify liquid by virtue of the fact that the device for purifying liquid is able to discharge all of the unpurified liquid from an unpurified liquid receiving tank when a volume of gas which is greater than the volume of unpurified liquid situated in the unpurified liquid receiving tank is fed in. The technical result is an increase in the degree of purification of the liquid with a simultaneous reduction in the process time for the purification of the liquid.

US Appl. No. 2014/0332478 teaches a pitcher and a filtration unit, as well as a filtration system comprising said pitcher and said filtration unit.

US Appl. No. 2013/0119060 discloses a lid assembly for a travel beverage container.

GB Pat. No. 2330133 teaches a closure assembly for use on pressurized containers, such as carbonated beverage containers.
there is a screw-thread on the spout of the raw liquid vessel and there is at least one ledge on each turn of thread, the length of the ledge is at least a portion of the length of the turn of thread. The upper part of the lid can be made as a flip-top, the flip-top is made with a clamping device. The closure member can be formed by at least one ledge made in the base of the lid and at least one projection made on the clamping device of the flip-top. The clamping device can be formed by latches made on the lower surface of the flip-top and the grooves made in the base of the lid. A spring valve is made in the flip-top, the spring valve is in communication with the raw liquid vessel. The lid can be equipped with a lid lift velocity restriction means, acting as microlift, and made as a joint connecting the upper part of lid with the base. There is a disk in the upper part of lid, the disk is equipped with a sealing element. The liquid purification device is further equipped with a gas injection switch made as a level sensor in contact with the control panel.

### Brief description of drawings.

Figure 1 depicts the liquid purification device.
Figure 2 depicts the spout of the raw liquid vessel and the lid.
Figure 3 depicts the lid with rotating disk in the upper part.
Figure 4 depicts the lid with the closure member, formed by a flip-top and the base of the lid. Note: by the term «flip-top» it is understood the flap edging part of the lid.
Figure 5 depicts the closure element, formed by the ledge of the flip-top clamping device and the protrusion of the base of the lid.

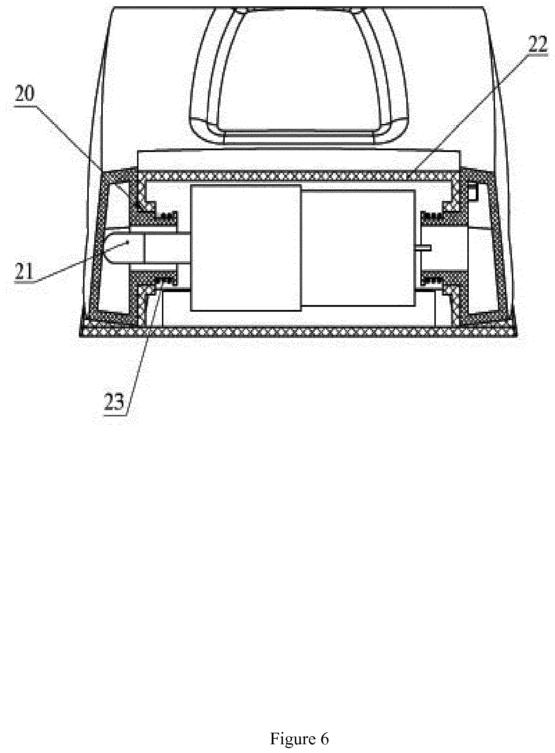

Figure 6 depicts lift velocity restriction means.
Figure 7 depicts the closure member formed by spring valve, flip-top latches and grooves of the base of the lid.

### Description.

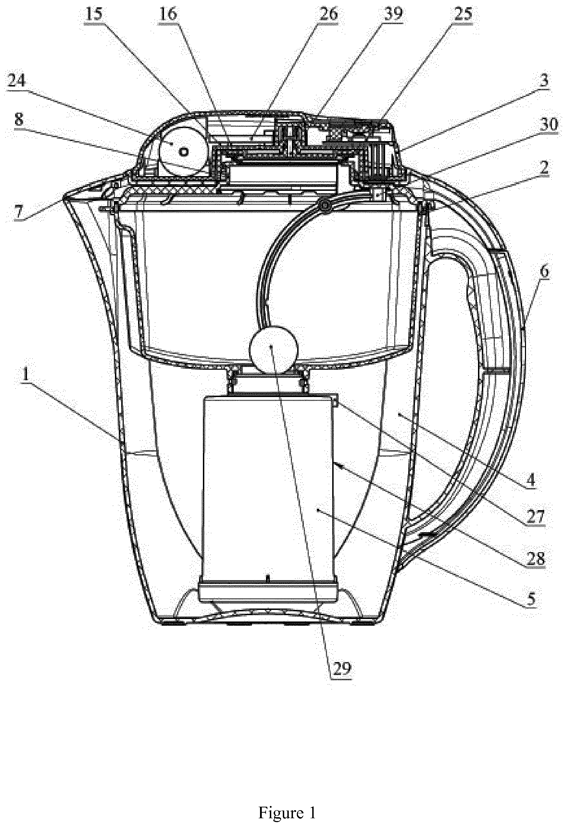

The liquid purification device 1 contains raw liquid vessel 2, lid 3, purified liquid vessel 4, filtration cartridge 5, output purified liquid means 7, the gas injection block (not presented in the Figures), connected to raw liquid vessel 2 (Figure 1).

Also the device 1 maybe equipped with handle 6 (Figure 1). Also cavities, located symmetrically from each other on the side walls of the purified liquid vessel 4 can be used as a handle (not presented in the Figures).

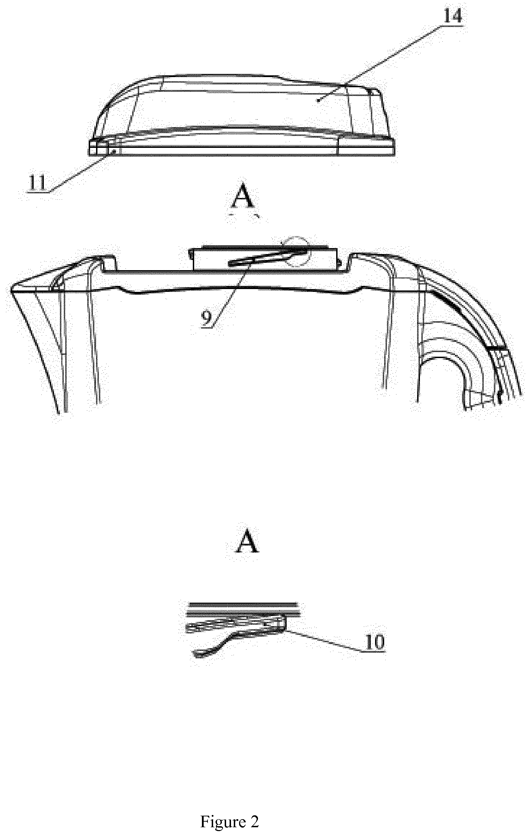

The vessel 2 for the raw liquid is made with the spout 8. There is a screw-thread on the spout (Figures 1 and 2). Each of at least three turns 9 of the screw-thread has at least one ledge 10. The length of the ledge 10 is at least a part of the length of the turn 9 of thread (Figure 2). The vessel 2 for the raw liquid is connected with the lid 3, through the channel 39 (Figures 1, 3, 4, 7).

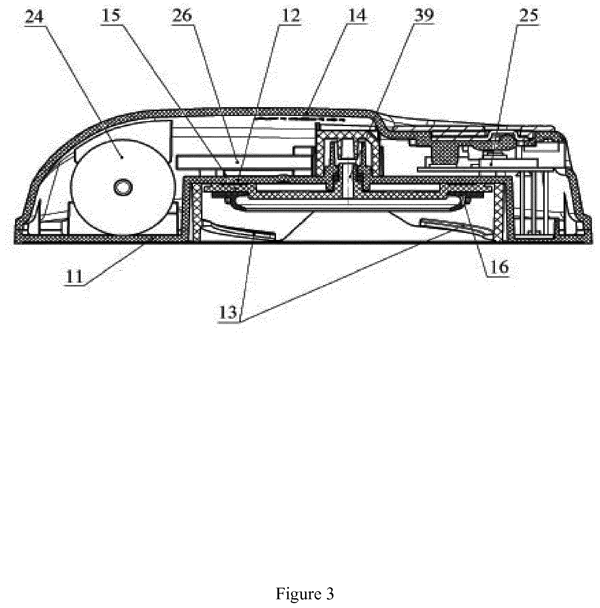

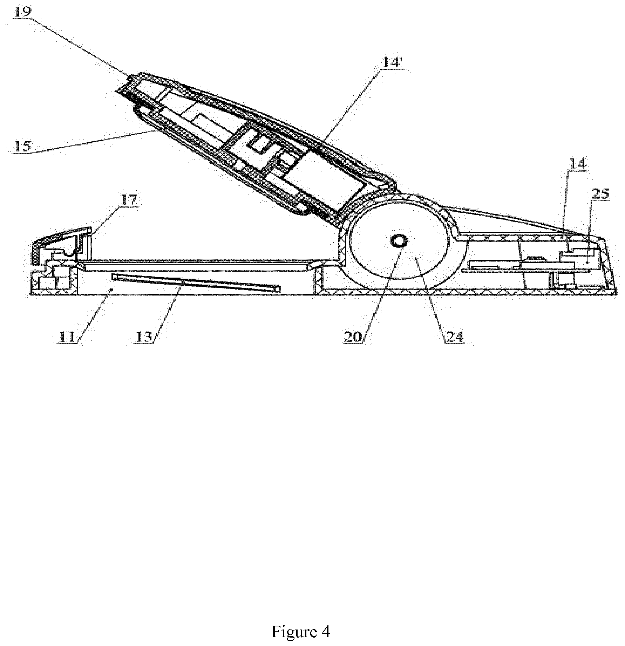

Lid 3 is made as removable part and consists of the frame 14, base 11 and the upper part 12 (Figures 2 and 3). The screw thread 13 is made along the perimeter of the side wall of the upper part 12 of the lid 3. Inner upper wall 15 of the upper part 12 may be made for example as a disk. On the inner wall 15 there is sealing element 16, made for example in the form of a gasket. The part of the frame of the lid 3 may be made as a flip-top 14' (Figure 4).

The liquid purification device 1 is made with the closure element. Indicated closure element is necessary to ease the depressurization of the liquid purification device on the first step of the opening of the lid.

The closure member maybe formed when the lid 3 and the spout 8 of the raw liquid vessel 2 are connected together (Figure 2). As it was said before, on the turns 9 of the screw thread of the spout 8 there are ledges 10 (Figure 2), on the inner side wall of the lid 3 there is a screw thread 13 (Figure 3). Because of such construction of the upper part 12 of the lid 3 the disk is capable to rotate. This is necessary when the lid 3 is opened and closed the gasket 16 will not dislodge and undergo the friction.

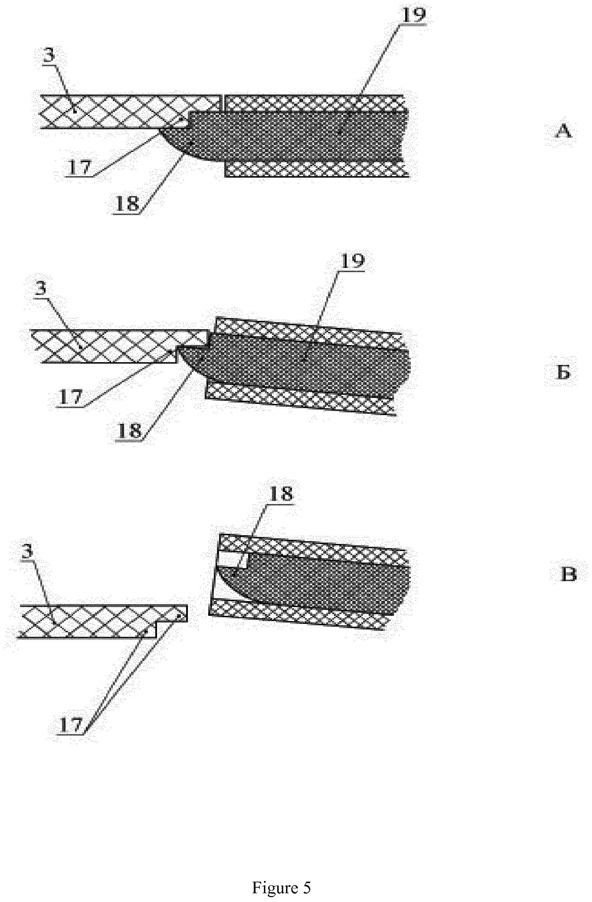

In case when the part of the frame 14 of the lid 3 is made in the form of flip-top 14', the lid 3 maybe equipped with the lift velocity restriction means 20. The indicated means 20 maybe formed in the spot where the flip-top 14' is connected to the base 11 of the lid 3. There is a horizontal pillar in the base 11 of the lid 3. The pillar is placed in the case 22, the length of the case 22 is somewhat less, then the length of the pillar 21. The case 22 envelopes the central part of the pillar 21 leaving the ledges at both sides. The flip-top 14' is set on these ledges. So the joint is formed between flip-top 14' and the base 11 of the lid 3. The lift velocity restriction means 20 of the lid 3 acts as a microlift due to the springs 23, set in a pillar 22 (Figure 5).

The closure element may be also formed by at least one ledge 17, made in the base 11 of the lid 3, and at least, one protrusion 18, made in the clamping device 19 of the flip-top 14' (Figures 5A-5C).

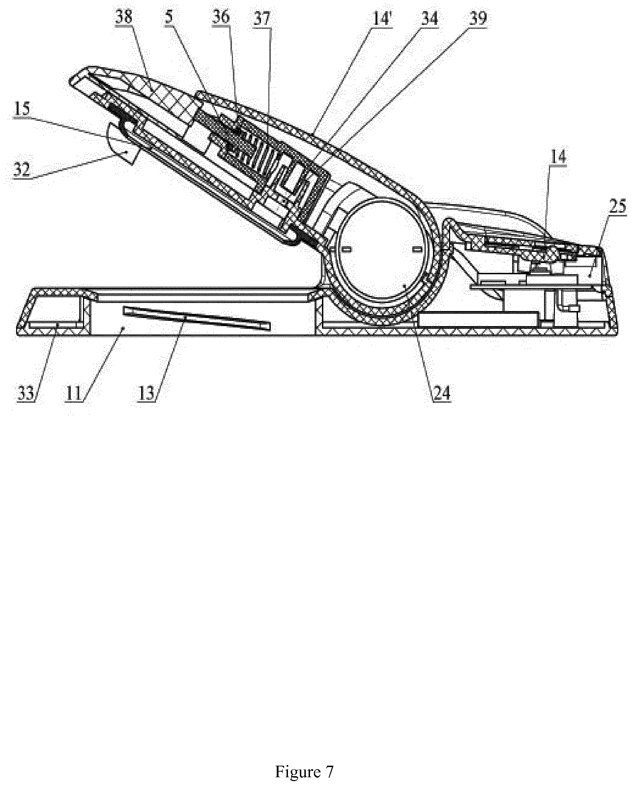

Also the closure member maybe formed by the latches 32, made on the lower part of the flip-top 14' and grooves 33, made on the base 11 of the lid 3 (Figure 7). At the same time there is a spring valve on the flip-top 14'. The spring valve is placed in the case 34 and has a pillar 35, and the sealing ring 36 set on the pillar 36 and the spring 37. There is a button 38 on a flip-top 14'. The case 35 of the valve is made so that the inner space of the valve is connected with the channel 39, and so with the raw liquid vessel 2.

The gas injection block includes gas injection means 24, the control panel 25 and power supply 26 (Figures 1 and 3). The gas injection block may be placed in a lid 3 in its base 11 of the lid 3, or partly in the base 11 of the lid 3 and partly in a flip-top 14'. For example, the gas injection means 24 may be placed in a case 22 of the lid 3 lift velocity restriction means 20, and the control panel 25 under the frame 14 of the flip-top 14' (Figure 4). All other elements are placed in base 11 of the lid 3 (Figures 1, 3, 4). The gas injection means 24 may be made as a pneumatic pressurizer 24, for example, a microcompressor, connected through the joint element to the raw liquid vessel. Gas injection means 24 is connected to the gas supply means, for example, to the ambient air.

Also the gas injection means 24 may be made as a manually controlled pump, for example, pomp or displacement pump (not depicted in the Figures).

The control panel 25, may be made as a microcontroller, containing a volatile memory, a real-time counter and an evaluator. Control panel 25 may be placed under the frame 14 on the base 11 of the lid 3 (Figures 1, 2) or in the handle 6 (not depicted in the Figures) of the liquid purification device.

In case, if the gas injection means 24 is made as manually controlled pump, the control panel 25 may be made as a piston or as a button to pump the air inside the raw liquid vessel 2.

The power supply 26 maybe placed for example in the base 11 (Figures 1 and 3) or in the handle 6 (not depicted in the Figures) of the liquid purification device 1. The power supply 26 can be the for example battery power or accumulator battery.

The connection between elements of the gas injection block is the following. The power supply 26 is connected to the input of the control panel 25, the output of the control panel 25 is connected to the gas injection means 24, the output of which is connected to the raw liquid vessel 2.

The filtration cartridge 5 consists of the body 28 (Figure 1) where at least one filtration element is placed (not depicted in the Figures). Filtration element may be a thick sorbent mixture on the bases of highly effective finely dispersed adsorbents, for example, powdered activated carbon, ion exchange resins of different dispersion, ion exchange fibers, activated carbon fibers. In addition filtration element may include porous microfilter or net with the pore size from 0.4 to 20 mkm to protect water from particles with diameter from 0.4 to 20 mkm, for example, bacteria - Escherichia coli, Shigella dysenteriae, cyst of lamblia.

Or for example, two additional filtration elements may be placed inside the filtration element 5 body 28. One of them can be placed inside the filtration element with the sorption mixture, and can be for example a hollow fiber module or carbon element. The third filtration element may be placed in the bottom of the second filtration element to avoid the infection of the hollow fiber module. The third filter element may be filled with for example activated carbon.

In this case the filtration element 5 may have the tube 27 for purified water output. The tube 27 is placed in the upper part of the filtration cartridge 5, above the purified liquid level in the purified liquid vessel 4 after the filtration of liquid is finished (Figure 1).

The tube 27, may be molded as a part of body 28 of the filtration cartridge 5 (Figure 1).

Also the claimed liquid purification device 1 is equipped with the switch button (not depicted in the Figures), which may be placed in the base 11 or in the frame 14 of the lid 3, or in the handle 6.

The claimed liquid purification device 1 is equipped with the gas injection block cut-off means. The cut-off means may be made as a level sensor 29, contacting with the control panel 25, where the immovable sensor 30 is placed. The level sensor 29 may be a float sensor. The immovable sensor 30 may be for example a Hall sensor or reed switch.

The liquid purification device 1 functions as follows.

The lid 3 is opened. The raw liquid is poured through the spout 8 into the raw liquid vessel 2. Then the lid 3 is closed. The device 1 is switched with the switch button (not depicted in the Figures). The gas injection block begins to inject gas into raw liquid vessel 2: if the gas injection device 24 is a pneumatic pressurizer, this is done automatically, if it is a manually operated pump or a piston this is done manually. Under gas positive pressure liquid starts to flow into filtration cartridge 5. Purified liquid is collected in the purified liquid vessel 4. In case when the gas injection means 24 is a pneumatic pressurizer when liquid level in the raw liquid vessel 2 falls down to its minimal value contact between float-type sensor 29 and immovable sensor 30 is closed and at the same time the control panel 25 sends switches off the pneumatic pressurizer 24.

The pressure in the liquid purification device 1 falls to the atmospheric. The lid 3 maybe easily put off from the raw liquid vessel. But there are some cases when user has to put the lid 3 off when the device 1 is under pressure, for example, during filtration process or when the control panel 25 will not be able to switch off the gas injection block. To open the lid 3 when the device 1 is under pressure may be dangerous as the lid 3 can be thrown away and can hurt the user. Compared to the closest analogue the claimed device let the user put the lid 3 off safely, even when the device 1 is under pressure.

The opening of the lid 3 is done in two steps. On the first step the device 1 is depressurized. It is possible due to the closure member or the lid 3 lift velocity restriction means 20. When the closure member is formed by ledges 10 on the turns 9 of the screw thread of the spout 8 and screw thread 13 made in the lid 3 and the lid 3 is turned. At first, the surface of the turn of the lid 3 slides along the surface of the turn 9 of the spout of the lid 3 gradually opening the raw liquid vessel 2. The pressure is reduced, but the turn 9 of the lid 3 is engaged with the protrusion 10, made on the turn on the spout 8, so the lid 3 is retained on the spout 8, and the user can easily and safely open the lid 3 on the second stage. The same process takes place if the closure member is formed by the ledge 17 on the inner wall of the base 8 of the lid 3 and projection 18 on the flip-top 14' clamping 19. When the button (not depicted in the Figures), which is in the outer wall of the flip-top 14', the ledge 18 of the clamping device 19 moves out of the clamp of the projection 18 of the base 8. The lid 3 lift velocity restriction means 20 act as a microlift. When user pushes the button (not depicted in the Figures) the lid 3 lift velocity restriction means 20 gradually opens the flip-top 14', so the pressure is gradually decreased within a certain period of time.

When there is a spring valve in the flip-top 14' user presses the button 38 and latches 32 move out of the grooves 33 and the side wall of the button 38 begins to press the pillar 36, compressing the spring 37, the sealing ring 36 moves away from the frame, opening the hole for the air outlet. So depressurization of the liquid purification device takes place on the first stage. After this the user may easily, safely and fully open the lid - the second stage of the lid opening.

From what has been said it is seen that the lid 3 opening and the depressurization, is done safely for the user. Construction of the lid 3 is easy to use. Besides the lid 3 can be taken off together with the gas injection means, where the microcontroller and the micropump are placed. So the raw liquid purification vessel 2 can be washed without damaging the control panel 25 and the pneumatic pressurizer 26.

In the description of the invention the preferable embodiment is given. The invention maybe changed, but within the limits of the present claims. This gives the possibility of its common use.

## Claims

1. A liquid purification device (1) operating under gas pressure and containing a raw liquid vessel (2) with a spout (8), a lid (3), a filtration cartridge (5), a purified liquid vessel (4), an output purified liquid means (7), a gas injection block connected to the raw liquid vessel (2) and containing a gas injection means (24), a control panel (25) and a power supply (26), ***characterized in* that** the liquid purification device (1) further contains a closure member and the lid (3) of the liquid purification device (1) is configured as an openable lid with at least two opening stages of the closure member, said closure member is formed either
by an interconnection of the spout (8) and the lid (3), wherein there is
- a screw-thread (13) on the lid (3), and
- a screw-thread on the spout (8) with turns (9) of thread, and
- at least one ledge (10) on each turn (9) of thread, the length of the ledge (10) is at least a portion of the length of the respective turn (9) of thread;
or
by at least one ledge (17) made in a base (11) of the lid (3) and at least one projection (18) made in a clamping device (19) of a flip-top (14'), wherein said flip-top (14') is formed by an upper part of (12) of the lid (13).

2. The liquid purification device (1) according to claim 1, **characterized in that** the base (11) and the upper part (12) of the lid (3) are placed in a body frame (14).

3. The liquid purification device (1) according to claim 1, **characterized in that** the clamping device (19) is formed by latches (32) made on a lower surface of the flip-top (14') and grooves (33) made in the base (11) of the lid (3).

4. The liquid purification device (1) according to claim 1, **characterized in that** a spring valve is made in the flip-top (14'), the spring valve is in communication with the raw liquid vessel (2).

5. The liquid purification device (1) according to claim 2, **characterized in that** the lid (3) is equipped with a lift velocity restriction means (20), acting as microlift, and made as a joint connecting the upper part (12) of the lid (3) with the base (11) of the lid (3).

6. The liquid purification device (1) according to claim 2, **characterized in that** there is a disk in the upper part (12) of lid (3), the disk is equipped with a sealing element (16).

7. The liquid purification device (1) according to claim 1, **characterized in that** the liquid purification device (1) is equipped with a gas injection means switch made as a level sensor (29) in contact with the control panel (25).

## Patentansprüche

1. Flüssigkeitsreinigungsvorrichtung (1), die unter Gasdruck arbeitet und einen Rohflüssigkeitsbehälter (2) mit einem Ausguss (8), einen Deckel (3), eine Filtrationskartusche (5), einen Behälter für gereinigte Flüssigkeit (4), ein Ausgabemittel für gereinigte Flüssigkeit (7), einen Gaseinleitungsblock, der mit dem Rohflüssigkeitsbehälter (2) verbunden ist und ein Gaseinleitungsmittel (24) enthält, ein Steuerungsbedienfeld (25) und eine Stromversorgung (26) enthält, ***dadurch gekennzeichnet,* dass** die Flüssigkeitsreinigungsvorrichtung (1) weiter ein Verschlusselement enthält, und der Deckel (3) der Flüssigkeitsreinigungsvorrichtung (1) als ein öffenbarer Deckel mit mindestens zwei Öffnungsstufen des Verschlusselements ausgestaltet ist, wobei das Verschlusselement entweder
durch eine Verbindung des Ausgusses (8) und des Deckels (3), wobei sich
- ein Schraubgewinde (13) an dem Deckel (3) und
- ein Schraubgewinde an dem Ausguss (8) mit Gewindewindungen (9) und
- mindestens eine Leiste (10) auf jeder Gewindewindung (9) befindet, wobei die Länge der Leiste (10) mindestens ein Abschnitt der Länge der entsprechenden Gewindewindung (9) ist;
oder
durch mindestens eine Leiste (17), die in einer Basis (11) des Deckels (3) ausgebildet ist, und mindestens einen Vorsprung (18), der in einer Klemmvorrichtung (19) eines Klappdeckels (14') ausgebildet ist, wobei der Klappdeckel (14') durch einen oberen Teil (12) des Deckels (13) gebildet wird, gebildet ist.

2. Flüssigkeitsreinigungsvorrichtung (1) nach Anspruch 1, **dadurch gekennzeichnet, dass** die Basis (11) und der obere Teil (12) des Deckels (3) in einem Gehäuserahmen (14) platziert sind.

3. Flüssigkeitsreinigungsvorrichtung (1) nach Anspruch 1, **dadurch gekennzeichnet, dass** die Klemmvorrichtung (19) durch Riegel (32), die auf einer unteren Oberfläche des Klappdeckels (14') ausgebildet sind, und Rillen (33), die in der Basis (11) des Deckels (3) ausgebildet sind, gebildet ist.

4. Flüssigkeitsreinigungsvorrichtung (1) nach Anspruch 1, **dadurch gekennzeichnet, dass** ein Federventil in dem Klappdeckel (14') ausgebildet ist, wobei das Federventil mit dem Rohflüssigkeitsbehälter (2) in Kommunikation steht.

5. Flüssigkeitsreinigungsvorrichtung (1) nach Anspruch 2, **dadurch gekennzeichnet, dass** der Deckel (3) mit einem Hebegeschwindigkeitsbegrenzungsmittel (20) ausgestattet ist, das als Mikrolift dient, und als ein Verbindungselement ausgebildet ist, das den oberen Teil (12) des Deckels (3) mit der Basis (11) des Deckels (3) verbindet.

6. Flüssigkeitsreinigungsvorrichtung (1) nach Anspruch 2, **dadurch gekennzeichnet, dass** sich eine Scheibe in dem oberen Teil (12) vom Deckel (3) befindet, wobei die Scheibe mit einem Dichtungselement (16) ausgestattet ist.

7. Flüssigkeitsreinigungsvorrichtung (1) nach Anspruch 1, **dadurch gekennzeichnet, dass** die Flüssigkeitsreinigungsvorrichtung (1) mit einem Gaseinleitungsmittelschalter, der als ein Pegelsensor (29) ausgebildet ist, in Kontakt mit dem Steuerungsbedienfeld (25) ausgestattet ist.

## Revendications

1. Dispositif de purification de liquide (1) fonctionnant sous pression gazeuse et contenant une cuve de liquide brut (2) avec un bec verseur (8), un couvercle (3), une cartouche de filtration (5), une cuve de liquide purifié (4), un moyen de sortie de liquide purifié (7), un bloc d'injection de gaz raccordé à la cuve de liquide brut (2) et contenant un moyen d'injection de gaz (24), un panneau de commande (25) et une alimentation électrique (26), ***caractérisé en ce que*** le dispositif de purification de liquide (1) contient en outre un élément de fermeture et le couvercle (3) du dispositif de purification de liquide (1) est configuré pour être un couvercle ouvrable avec au moins deux phases d'ouverture de l'élément de fermeture, ledit élément de fermeture est formé soit
par une liaison du bec verseur (8) et du couvercle (3), dans lequel sont présents
- un pas-de-vis (13) sur le couvercle (3), et
- un pas-de-vis sur le bec verseur (8) avec des pas (9) de filet, et
- au moins un rebord (10) sur chaque pas (9) de filet, la longueur du rebord (10) correspond à au moins une partie de la longueur du pas (9) respectif de filet ;
soit
par au moins un rebord (17) ménagé dans une base (11) du couvercle (3) et au moins une saillie (18) ménagée dans un dispositif de serrage (19) d'un couvercle rabattable (14'), dans lequel ledit couvercle rabattable (14') est formé par une partie supérieure (12) du couvercle (13).

2. Dispositif de purification de liquide (1) selon la revendication 1, **caractérisé en ce que** la base (11) et la partie supérieure (12) du couvercle (3) sont placées dans une structure de corps (14).

3. Dispositif de purification de liquide (1) selon la revendication 1, **caractérisé en ce que** le dispositif de serrage (19) est formé par des taquets (32) ménagés sur une surface inférieure du couvercle rabattable (14') et des rainures (33) ménagées dans la base (11) du couvercle (3).

4. Dispositif de purification de liquide (1) selon la revendication 1, **caractérisé en ce qu'**une soupape à ressort est ménagée dans le couvercle rabattable (14'), la soupape à ressort est en communication avec la cuve de liquide brut (2).

5. Dispositif de purification de liquide (1) selon la revendication 2, **caractérisé en ce que** le couvercle (3) est équipé d'un moyen de limitation de vitesse de soulèvement (20), agissant en tant que ralentisseur, et conçu sous forme de jonction reliant la partie supérieure (12) du couvercle (3) avec la base (11) du couvercle (3).

6. Dispositif de purification de liquide (1) selon la revendication 2, **caractérisé par** la présence d'un disque dans la partie supérieure (12) du couvercle (3), le disque est équipé d'un élément d'étanchéité (16).

7. Dispositif de purification de liquide (1) selon la revendication 1, **caractérisé en ce que** le dispositif de purification de liquide (1) est équipé d'un commutateur de moyen d'injection de gaz conçu sous forme de capteur de niveau (29) en contact avec le panneau de commande (25).
